# EUROPÄISCHE PATENTSCHRIFT

(11) **EP 1 222 888 B1**
(45) Veröffentlichungstag und Bekanntmachung des Hinweises auf die Patenterteilung: **02.06.2004**
(21) Anmeldenummer: 02000837.1
(22) Anmeldetag: 15.01.2002
(51) Int. Cl.: A47J 27/08, F16J 13/24

(54) **Drucktragender Verschlussdeckel mit automatischer Verriegelung**
Pressurised sealing lid with automatic locking mechanism
Couvercle sous pression avec verrouillage automatique

(30) Priorität: 16.01.2001 DE 10102414
(43) Veröffentlichungstag der Anmeldung: 17.07.2002
(73) Patentinhaber: Bichsel, Rudolf, 3400 Burgdorf (CH)
(72) Erfinder: Bichsel, Rudolf, 3400 Burgdorf (CH)
(74) Vertreter: Witte, Alexander, Dr.-Ing.

(56) Entgegenhaltungen:
- DE-A- 3 206 369
- DE-A- 3 503 544
- DE-A- 3 807 188
- GB-A- 2 347 577
- US-A- 1 439 000
- US-A- 5 839 357

## Beschreibung

Die Erfindung betrifft einen Deckel zum Verschließen einer Öffnung in einem Druckbehälter, mit einem Deckelkörper und mit einer Verriegelung zum Verriegeln des Deckelkörpers mit dem Druckbehälter, wobei die Verriegelung mehrere um die Öffnung umfänglich verteilt angeordnete Verriegelungselement aufweist, die am Deckekörper angebracht sind und die über eine zentrale Steuerungsvorrichtung automatisiert steuerbar sind.

Ein derartiger Deckel für einen elektrischen Dampfkocher, ist aus der US-A-5 839 357 bekannt.

Die Verriegelungselemente sind als Klauen ausgebildet, die in einem Kragenflansch, der die Öffnung am Druckbehälter umrundet eingreifen.

Aus der US-A-1 439 000 ist ein Deckel zum Verschließen einer Öffnung in einem Druckbehälter beschrieben, der eine Steuerungsvorrichtung aufweist die die Verriegelungselemente derart steuert, dass diese aus einer verriegelnden Stellung in eine Zwischenstellung bewegbar sind, in der der Deckelkörper zwar noch unverlierbar am Druckbehälter von den Verriegelungselementen gehalten ist, jedoch ein Druckausgleich vom Druckbehälter zur Außenwelt durch Austreten von Druckmedium zwischen Öffnung und Deckelkörper ermöglicht ist, und in einer Zwischenstellung der Verriegelungselemente kann der Deckelkörper etwas von der Öffnung abheben. Die Steuerung erfolgt mechanisch durch einen Steuerhebel.

Es ist Aufgabe der vorliegenden Erfindung einen Deckel der eingangs genannten Art dahingehend weiter zu entwickeln, dass dieser einfach und auf Dauer sicher handhabbar ist, und entsprechende Apparaturen mit einem solchen Deckel zu verschließen, wobei insbesondere der Öffnungsvorgang des Deckels sicher durchgeführt werden kann.

Erfindungsgemäß wird die Aufgabe dadurch gelöst, dass die Verriegelungselemente über an der Außenseite des Deckelkörpers angeordnete Antriebe bewegbar sind, und dass die Steuerungsvorrichtung die Antriebe zwischen einer verriegelnden, einer Zwischenstellung und einer entriegelnden Stellung steuert.

Das Vorsehen der Verriegelungselemente am Deckelkörper hat den Vorteil, daß der Deckel als kompakte und von der Ausgestaltung des Druckbehältersystems systemunabhängige Einheit ausgebildet ist.

Die zentrale Steuerungsvorrichtung erlaubt eine automatisch gesteuerte Öffnung und Schließung der Verriegelungselemente direkt am Deckel.

Es müssen nun beim Öffnen oder auch beim Schließen keine Manipulationen an Bauteilen vorgenommen werden, die direkt am Druckbehälter angebracht sind. Anders ausgedrückt, der Druckbehälter selbst wird durch diese konstruktiven Bauelemente in keiner Weise beeinträchtigt. Der einzige mechanische Eingriff zwischen Deckel und Behälter besteht durch Eingriff der Verriegelungselemente. Die Verriegelungselemente selbst sind aber am Deckel angebracht. Dies eröffnet die Möglichkeit, auch sämtliche zum Bewegen und Steuern der Verriegelungselemente notwendigen Gerätschaften unabhängig vom Druckbehälter, insbesondere abseits vom Druckbehälter, anzuordnen, so daß weder beim Öffnen noch beim Schließen Manipulationen notwendig sind, die mit Bauteilen direkt am Druckbehälter durchzuführen sind.

Dies hat insbesondere in der industriellen Serienproduktion von rasch aufeinanderfolgenden Produktionsprozessen den erheblichen Vorteil, daß eine von der Konstruktion und Betriebsweise des Druckbehälters unabhängige "Deckelmechanik" geschaffen ist. Der Deckel selbst kann samt und sonders nach dem Öffnen abseits verbracht werden, beispielsweise während des Entleerens. Während des erneuten Befüllens des Druckbehälters kann der Deckel bei einer anderen Apparatur verwendet werden, oder auch zu Inspektionszwecken inspiziert und gegebenenfalls ausgetauscht werden.

Dies bringt erhebliche Vorteile in der industriellen Serienproduktion, und zwar durch die systematische Trennung von Druckbehälter einerseits und Deckel mit entsprechenden Verriegelungselementen daran und deren Steuerung andererseits.

Die automatisierte Steuerung der Verriegelungselemente am Dekkel benötigt daher auch keinerlei manuelle Manipulationen im Bereich der Öffnung mehr, so daß auch dem Sicherheitsaspekt im Falle ungewollter Gas- oder Dampfausdrücke Genüge getan ist.

Auch bei Einzelanlagen hat diese Systemtrennung den Vorteil, daß beim Öffnen keine Person Manipulationen unmittelbar im Bereich der Öffnung durchführen muß.

Bei Kleinanlagen kann es durchaus erforderlich sein, daß beispielsweise bei einem Trommelkocher Befüll- und Entleervorgänge noch unter Zuhilfenahme manueller Tätigkeit durchgeführt werden. Das Öffnen des Deckels, das aufgrund von Restdruckmengen im Inneren des Druckbehälters für die Handhabungsperson ein Risiko darstellt, kann nun gefahrlos durchgeführt werden.

Die Systemtrennung hat auch letztendlich auf die Konstruktion des Druckbehälters im Bereich dessen Öffnung Einfluß, denn es müssen nun nicht mehr entsprechende bauliche Vorkehrungen getroffen werden, um die Verriegelungselemente fest, beispielsweise durch Anschweißen, anbringen zu können.

Die Maßnahme, die Verriegelungselemente über an der Außenseite des Deckelkörpers angeordnete Antriebe zu bewegen hat den Vorteil, dass die für die Verriegelungselemente notwendigen Antriebe unmittelbar am Deckel angeordnet sind, somit eine kompakte Baueinheit geschaffen ist.

Die Steuerungsvorrichtung steuert die verschiedenen Stellungen der Verriegelungselemente einfach, sicher und zentral gesteuert.

In einer weiteren Ausgestaltung der Erfindung steuert die Steuerungsvorrichtung die Verriegelungselemente derart, daß diese aus einer verriegelnden Stellung in eine Zwischenstellung bewegbar sind, in der der Deckelkörper zwar noch unverlierbar am Druckbehälter von den Verriegelungselementen gehalten ist, jedoch ein Druckausgleich vom Druckbehälter zur Außenwelt durch Austreten von Druckmedium zwischen Öffnung und Deckelkörper ermöglicht ist.

Diese Maßnahme hat in sicherheitstechnischer Hinsicht den erheblichen Vorteil, daß über die Steuerungsvorrichtung die Verriegelungselemente gezielt in eine Zwischenstellung bewegt werden und somit einen Austritt von gegebenenfalls im Deckelkörper noch befindlichen restlichen Druckmedienmengen ermöglichen. Erst nach Durchschreiten der Zwischenstellung werden die Verriegelungselemente dann völlig entriegelt, und erst dann kann der Deckel abgenommen werden.

In einer weiteren Ausgestaltung der Erfindung kann in der Zwischenstellung der Verriegelungselemente der Deckelkörper etwas von der Öffnung abheben.

Diese Maßnahme hat den Vorteil, daß keine zusätzlichen Maßnahmen, wie Entlüftungsbohrungen oder Entlüftungskanäle, im Bereich der Öffnung vorgesehen werden müssen, sondern der Druckausgleich erfolgt schlicht und einfach durch geringfügiges An- oder Abheben des Deckels in der Zwischenstellung von seinem Sitz in der Öffnung.

In einer weiteren Ausgestaltung der Erfindung ist am Deckelkörper eine Abhebevorrichtung vorgesehen, die den Deckelkörper in der Zwischenstellung gezielt von der Öffnung abhebt.

Diese Maßnahme hat den Vorteil, daß das zuvor erwähnte Abheben des Deckels in der Zwischenstellung durch die Abhebevorrichtung automatisch gesteuert und auf jeden Fall stattfindet, unabhängig davon, ob nun der Innendruck ausreichend ist, um den Deckel in dieser Zwischenstellung abzuheben oder nicht. Dadurch wird der Sicherheitsaspekt perfektioniert. Bei dem eingangs erwähnten Beispiel eines Trommelkochers kann es vorkommen, daß aufgrund des klebrigen, körnigen, mit Sirup durchtränkten Inhalts der Deckel bzw. dessen Rand mit dem Innenrand der Öffnung "verklebt". Ist beim Öffnungsvorgang zwar noch ein Überdruck im Inneren des Druckbehälters vorhanden, dieser Überdruck ist aber nicht mehr ausreichend, um die "Klebeverbindung" zu lösen, so daß der Deckel in der Zwischenstellung nicht von der Öffnung abhebt, wird diese Maßnahme nun von der Abhebevorrichtung ganz gezielt durchgeführt. Durch Vorsehen der Abhebevorrichtung am Deckelkörper wird dem Grundprinzip der vorliegenden Erfindung treu geblieben, nämlich die entsprechenden konstruktiven Maßnahmen jeweils am Deckel und nicht am Druckbehälter vorzusehen.

In einer weiteren Ausgestaltung der Erfindung weist die Abhebevorrichtung einen über die Steuerungsvorrichtung bewegbaren Bolzen auf, der sich auf dem Druckbehälter abstützt und dabei den Deckelkörper gezielt von der Öffnung abhebt.

Diese Maßnahme hat den Vorteil, daß durch eine mechanisch robuste und einfache Ausgestaltung das Abheben des Deckels von der Öffnung sichergestellt wird, wobei dies steuerungstechnisch einfach dadurch durchgeführt wird, daß die Steuerungsvorrichtung, die auch die Verriegelungselemente steuert, diesen Bolzen bewegt. Somit kann die Schrittfolge "Verriegelungselemente in Zwischenstellung - Deckel anheben" logisch verknüpft ablaufen.

In einer weiteren Ausgestaltung der Erfindung ist der Deckelkörper über einen Öffnungsmechanismus von der Öffnung weg und auf diese zu bewegbar.

Diese Maßnahme hat den Vorteil, daß durch den Öffnungsmechanismus der Deckel nach dem Entriegeln abgenommen werden kann.

Auch hier sind wieder entsprechende Konstruktionen möglich, insbesondere solche, die dann völlig unabhängig von dem Druckbehälter sind. Beispielsweise bei Reihen- oder Serienproduktionen können die Öffnungsmechanismen an die Deckel herangebracht oder herangefahren werden, um diese abzuheben und fortzubewegen.

In einer weiteren Ausgestaltung der Erfindung ist der Öffnungsmechanismus als Parallelogrammechanismus ausgebildet, der den Deckelkörper von der Öffnung abhebt und seitlich absetzt.

Diese Maßnahme hat den Vorteil, daß ein solcher Parallelogrammechanismus eine kompakte und in den Ruhelagen wenig raumergreifende Konstruktion darstellt, durch die es ermöglicht ist, den Deckel abzuheben und seitlich versetzt neben der Öffnung abzusetzen. Ein solcher Mechanismus ist insbesondere bei dem eingangs genannten Trommelkocher von Vorteil, da dieser ja einen länglichen, liegenden, sich um eine Horizontalachse drehenden Behälterkörper aufweist und die Öffnung längs der sich drehenden Zylinderwand angeordnet ist, also neben der Öffnung längs einer Mantellinie des Behälters ausreichend Platz zur Verfügung steht, um einen Deckel abzulegen, und dementsprechend auch genügend Platz zur Verfügung steht, um den entsprechenden Parallelogrammechanismus anzuordnen.

In einer weiteren Ausgestaltung der Erfindung weisen die Verriegelungselemente Klauen auf, die in einen Kragenflansch, der die Öffnung am Druckbehälter umrundet, eingreifen.

Diese an sich bekannte Maßnahme hat den Vorteil, daß konstruktiv einfache und mechanisch robuste Konstruktionsmittel herangezogen werden, um die sichere Verriegelung des Deckels an der Öffnung des Druckbehälters zu bewerkstelligen.

In einer weiteren Ausgestaltung der Erfindung sind die Verriegelungselemente als Hebel ausgebildet, die mit den Antrieben verbunden sind.

Diese Maßnahme hat den erheblichen Vorteil, daß eine kompakte Bauweise auf dem Deckel die Schwenkbewegung der Klauen ermöglicht, um diese zwischen den drei Stellungen hin- und herzuverfahren.

In einer weiteren Ausgestaltung der Erfindung ist zwischen dem Antrieb und dem Hebel ein Nocken angeordnet, über den der Hebel verschwenkbar und in Öffnungs- bzw. Schließrichtung des Deckelkörpers hin- und herbewegbar ist.

Diese Maßnahme hat den Vorteil, daß durch die Zwischenschaltung des Steuernockens definierte Stellungen des Hebels erzielt werden können, beispielsweise die verriegelnde Stellung, die Zwischenstellung und die entriegelnde Stellung. Dies ist auch steuerungstechnisch günstig. So kann beispielsweise die jeweilige Stellung des Nockens über Sensoren erfaßt werden und das entsprechende Signal in sicherheits- und funktionstechnischer Hinsicht ausgewertet und weiterverarbeitet werden, so daß hier auch weiterhin dem Sicherheitsaspekt Genüge getan wird.

In einer weiteren Ausgestaltung der Erfindung sind die Antriebe als Kolben/Zylinder-Einheiten ausgebildet, und das Ausfahrende des Kolbens ist mit dem Nocken verbunden, der sich auf dem Dekkelkörper abstützt.

Diese Maßnahme hat den erheblichen Vorteil, daß durch schlank bauende Linearantriebseinheiten die Verriegelungselemente bewegt werden und der Deckel mit als Steuerkulisse herangezogen wird, was zu einer baulichen Einfachheit beiträgt.

In einer weiteren Ausgestaltung der Erfindung erstrecken sich die Antriebe in radialer Richtung auf der Außenseite des Dekkelkörpers, und jeder Antrieb ist mit einem Verriegelungselement verbunden, wobei die Steuerungsvorrichtung die Antriebe synchronisiert steuert.

Diese Maßnahme hat den erheblichen Vorteil, daß jedes Verriegelungselement seinen eigenen Antrieb aufweist, wobei diese in kompakter, nämlich sich in radialer Richtung erstreckender Weise auf dem Deckel angeordnet sind und die Steuerung dann die gewünschte synchronisierte Steuerung beim Öffnen und Schließen ermöglicht.

In einer weiteren Ausgestaltung der Erfindung besteht jeder Antrieb aus zwei aneinandergereihten entgegengesetzten Kolben/Zylinder-Einheiten, wobei eine Kolben/Zylinder-Einheit zum Bewegen eines Verriegelungselements zwischen der verriegelnden und der Zwischenstellung dient und die andere Kolben/Zylinder-Einheit zum Bewegen zwischen der Zwischenstellung und einer entriegelnden Stellung dient.

Diese Maßnahme hat den Vorteil, daß für beide Bewegungsabschnitte eines Verriegelungselementes, nämlich dem ersten Abschnitt zwischen der verriegelnden und der Zwischenstellung, sowie dem zweiten Abschnitt zwischen der Zwischenstellung und der entriegelnden Stellung, eigene Kolben/Zylinder-Einheiten herangezogen werden, deren Kolben dann jeweils nur zwischen zwei Stellungen hin- und herverfahren werden müssen, die dem Bewegungsspielraum zwischen diesen beiden Abläufen entsprechen. Dies trägt erheblich zur Funktionssicherheit bei.

In einer weiteren Ausgestaltung der Erfindung ist vorgesehen, daß der Deckelkörper mit einer als Blähdichtung ausgebildeten Dichtung versehen ist.

Diese Maßnahme hat den Vorteil, daß durch die Blähdichtung von seiten des Deckels her ein zusätzlicher Sicherheitsaspekt zur Abdichtung bei geschlossenem Deckel beiträgt.

In einer weiteren Ausgestaltung der Erfindung ist die Blähdichtung, von der Steuerungsvorrichtung gesteuert, mit einem solchen Blähdruck beaufschlagbar, der größer ist als der Innendruck im Druckbehälter.

Diese Maßnahme hat in sicherheitstechnischer Hinsicht den erheblichen Vorteil, daß die mit dem hohen Druck aufgeblähte Blähdichtung ein Verklemmen von Deckel mit Druckbehälter sicherstellt, so daß einem Abspringen des Deckels bei Funktionsstörungen oder Fehlbedienungen entgegengewirkt wird.

In einer weiteren Ausgestaltung der Erfindung ist, benachbart zur Blähdichtung, eine Spülnut im Deckel ausgespart, in die ein Spülmittel zum Reinigen der Dichtung einspeisbar ist.

Diese Maßnahme hat den Vorteil, daß dies zu einer Erhöhung der Lebensdauer der Blähdichtung beiträgt, wobei auch hier wieder die Versorgung und Steuerung direkt vom Deckel aus bewerkstelligt wird, also dem Grundkonzept der vorliegenden Erfindung treu geblieben wird, alle diese Zusatzfunktionen am Deckel vorzusehen und von diesem aus zu steuern.

Wie eingangs erwähnt, kann der Deckel prinzipiell bei jeder Apparatur, die einen Druckbehälter aufweist, eingesetzt werden. Besonders vorteilhaft kann ein solcher Deckel bei einem Trommelkocher zum Behandeln von körnigem Gut eingesetzt werden.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend anhand eines ausgewählten Ausführungsbeispiels im Zusammenhang mit den beiliegenden Zeichnungen näher beschrieben und erläutert. Es zeigen:
- Fig. 1: einen Diametralschnitt eines erfindungsgemäßen Dekkels, der von einer durch diesen zu verschließenden Öffnung in einem Druckbehälter abgehoben ist;
- Fig. 2: eine Draufsicht auf den Deckel von Fig. 1 bzw. auf den durch diesen verschlossenen Behälter in verriegelndem Zustand, wobei der Deckel teilweise aufgebrochen ist, so daß der Kragenflansch des Druckbehälters ersichtlich ist, auf dem der Deckel sitzt;
- Fig. 3: eine stark vergrößerte, ausschnittsweise, der Darstellung von Fig. 1 am linken Ende vergleichbare Darstellung des Deckels, wobei dieser über ein Verriegelungselement in Form einer Klaue verriegelt ist;
- Fig. 4: eine entsprechende Darstellung wie Fig. 3, wobei sich das Verriegelungselement von Fig. 3 nunmehr in einer Zwischenstellung befindet;
- Fig. 5: eine der Fig. 4 entsprechende Darstellung, wobei gezeigt ist, daß in der Zwischenstellung der Deckel zum Druckausgleich etwas angehoben werden kann;
- Fig. 6: eine der Fig. 3 entsprechende Darstellung, wobei das Verriegelungselement sich in seiner entriegelnden Stellung befindet, die der Darstellung von Fig. 1 entspricht;
- Fig. 7: eine stirnseitige Ansicht eines Verriegelungselements von der Außenseite des Deckels her in radialer Richtung gesehen;
- Fig. 8: eine teilweise im Schnitt dargestellte Seitenansicht eines Öffnungsmechanismus zum Abheben des entriegelten Deckes;
- Fig. 9: eine der Fig. 8 entsprechende Darstellung, bei der der Deckel über einen Parallelogrammechanismus abgehoben ist;
- Fig. 10: eine Stellung des Öffnungsmechanismus, bei dem der Deckel seitlich versetzt ist; und
- Fig. 11: eine Draufsicht auf einen Trommelkocher, der mit einem erfindungsgemäßen Deckel und einem zuvor erwähnten Öffnungs- und Schließmechanismus versehen ist.

Ein in den Figuren dargestellter Deckel ist in seiner Gesamtheit mit der Bezugsziffer 10 bezeichnet.

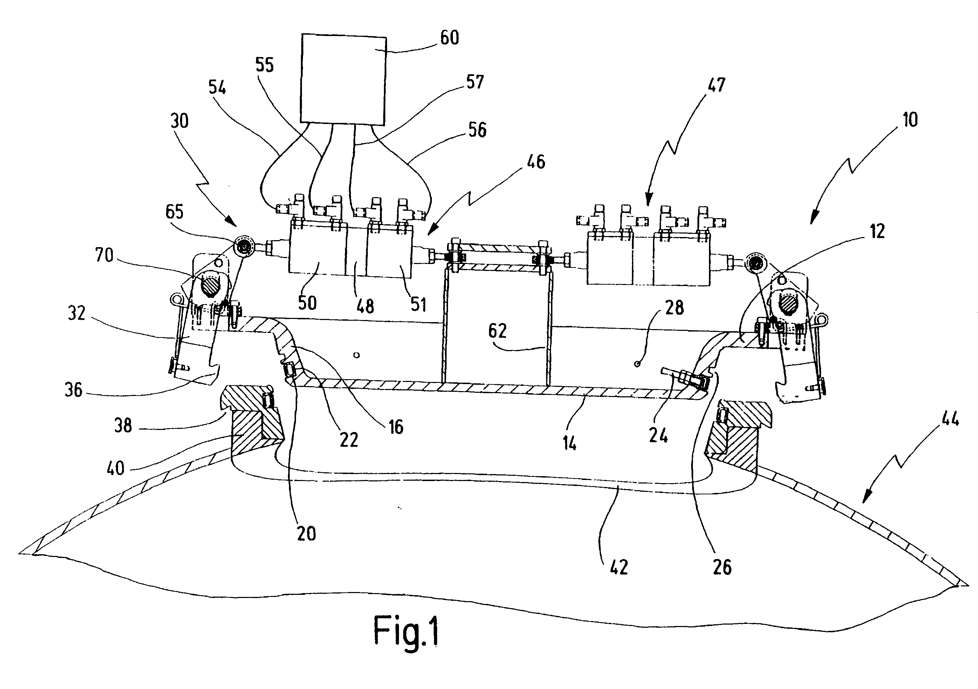

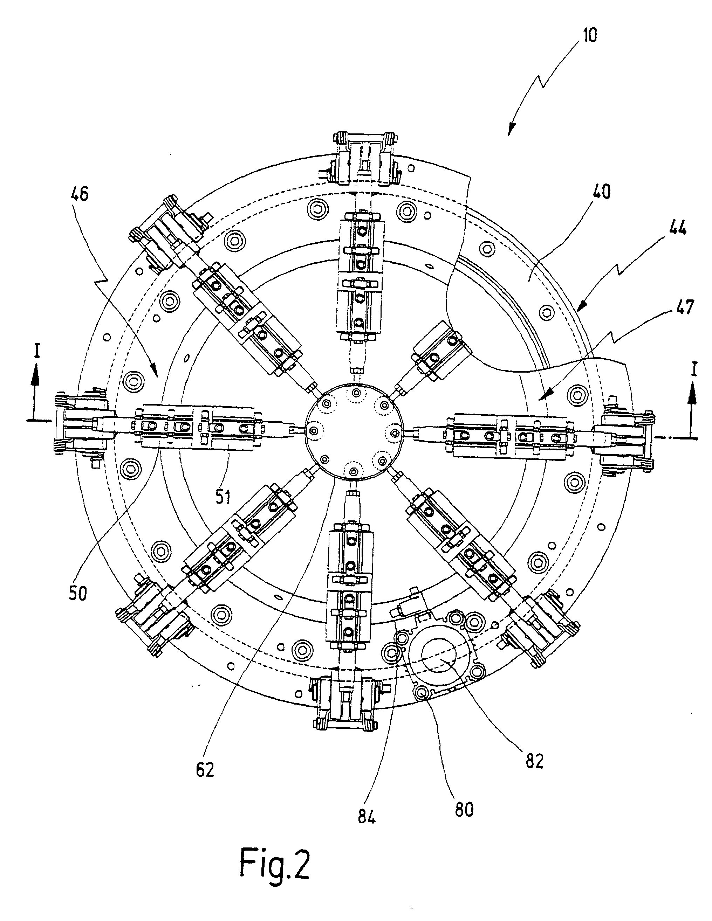

Wie insbesondere aus den Darstellungen von Fig. 1 und 2 zu entnehmen ist, weist der Deckel 10 einen Deckelkörper 12 auf, der eine etwa kreisförmige ebene Platte 14 aufweist, die über einen hochstehenden konischen Rand 16 in einen sich etwa parallel und im Abstand zur Platte 14 erstreckenden Ringflansch 18 übergeht. An der Außenseite des konischen Randes 16 ist eine Blähdichtung 20 in einer Nut 22 aufgenommen, die über ein Ventil 24 aufgebläht werden kann. Benachbart zur Nut 22 ist eine Spülnut 26 vorgesehen, die über Öffnungen 28 mit einem Spülmedium versorgt wird. Das Spülmedium dient zum Spülen der Blähdichtung 20 in der Nut 22.

Auf der Außen- bzw. Oberseite des Deckelkörpers 12 ist eine in ihrer Gesamtheit mit der Bezugsziffer 30 versehene Verriegelung angeordnet.

Die Verriegelung 30 weist acht umfänglich gleichmäßig verteilte Verriegelungselemente 32 auf, wobei jedes Verriegelungselement 32 als Hebel 34 ausgebildet ist, an dessen einem äußeren Ende eine Klaue 36 ausgebildet ist.

Jede Klaue 36 ist dazu vorgesehen, in eine ringförmige, entsprechend konturierte Hinterschneidung 38 an der Unterseite eines Kragenflansches 40 einzugreifen. Der Kragenflansch 40 umrundet dabei eine Öffnung 42 in einem Druckbehälter 44, wobei die Öffnung 42 durch den Deckel 10 verschlossen und dieser über die Verriegelung 30 verriegelt wird.

Jedes Verriegelungselement 32 wird über einen Antrieb bewegt, wobei in der Schnittdarstellung von Fig. 1 zwei diametral gegenüberliegende Antriebe 46 und 47 zu erkennen sind.

Jeder Antrieb 46 bzw. 47 weist einen Doppelzylinder 48 auf.

Jeder Doppelzylinder, wobei dies nur beispielhaft anhand des Doppelzylinders 48 des Antriebes 46 beschrieben ist, ist aus zwei aneinandergereihten, entgegengesetzt ausgerichteten Kolben/Zylinder-Einheiten 50 bzw. 51 aufgebaut.

Die Kolben/Zylinder-Einheit 50 ist über zwei Leitungen 54 und 55 und dementsprechend die Kolben/Zylinder-Einheit 51 über zwei Leitungen 56 und 57 mit einer zentralen Steuerungsvorrichtung 60 verbunden. Die Kolben/Zylinder-Einheiten arbeiten als pneumatische Zylinder.

Der aus der radial weiter innen liegenden Kolben/Zylinder-Einheit 51 ausfahrbare Kolben ist jeweils an einem zentralen, mittigen, ringförmigen Körper 62 befestigt, wie das insbesondere aus der Draufsicht von Fig. 2 ersichtlich ist.

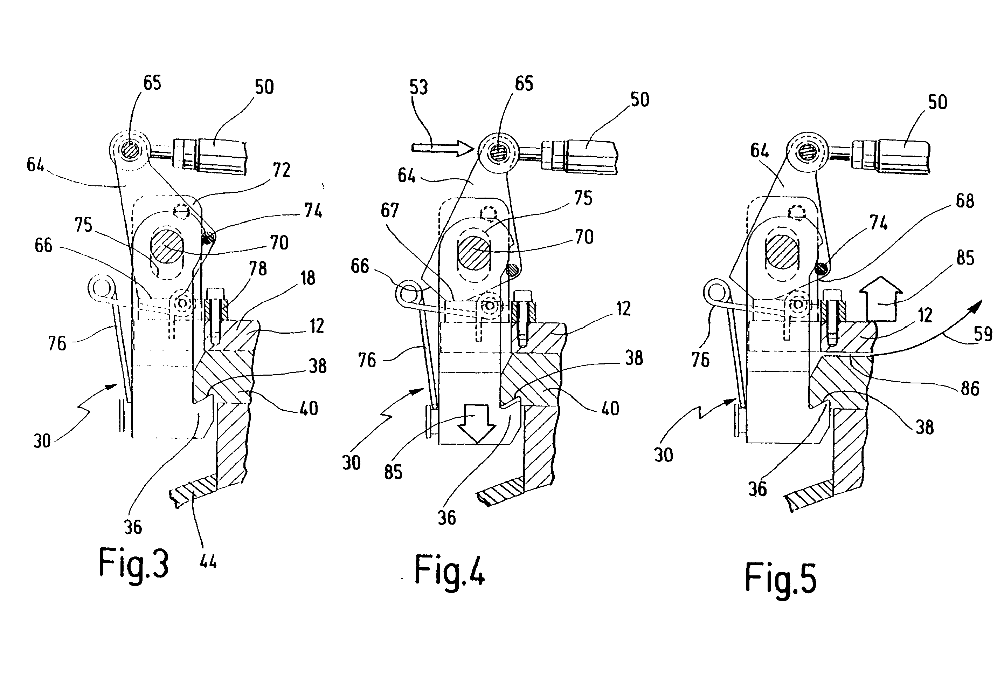

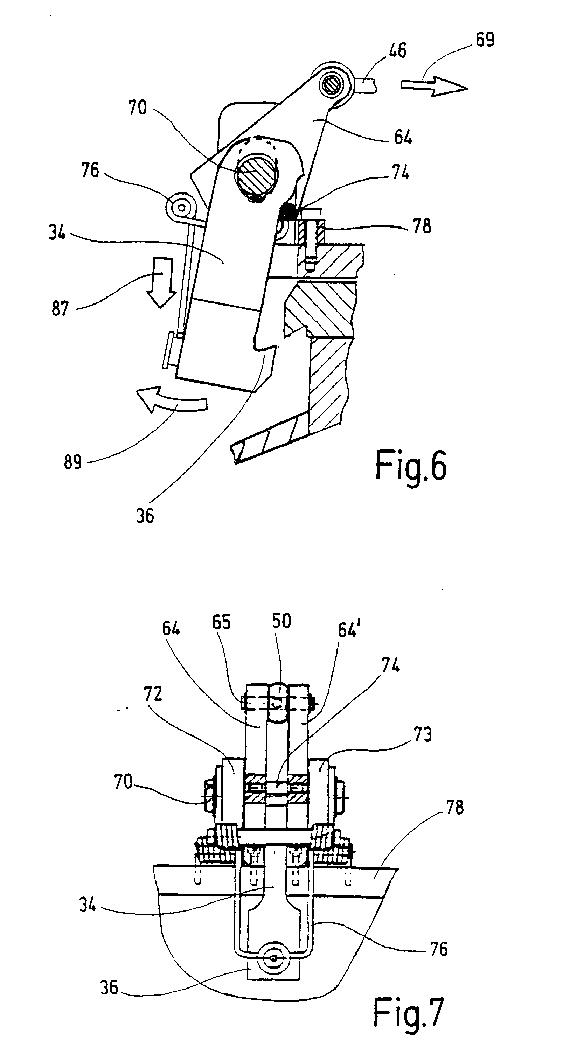

Der aus der jeweiligen Kolben/Zylinder-Einheit 50 ausfahrbare Kolben ist über einen Bolzen 65, wie das insbesondere aus den Fig. 3 bis 7 hervorgeht, mit zwei Nockenplatten 64, 64' verbunden. Zwischen den beiden Nockenplatten 64, 64' ist der jeweilige Hebel 34 angeordnet, wie das insbesondere aus Fig. 7 ersichtlich ist. Die Nockenplatten 64, 64' sind mit dem Hebel 34 über einen Bolzen 70 relativ zueinander verdrehbar gehalten. Der Bolzen 70 ist in zwei äußeren seitlichen Bolzenführungsplatten 72 und 73 geführt, wobei diese ein hochstehendes Langloch 75 aufweisen. Zwischen den Nockenplatten 64, 64' erstreckt sich ein Mitnehmer 74.

Jede Nockenplatte 64, 64' weist drei unterschiedliche Funktionsflächen 66, 67, 68 auf, wie das nachfolgend anhand der Arbeitsweise noch beschrieben werden wird, wobei sich diese Funktionsflächen 66, 67, 68 jeweils auf einer Auflage 78 am oberen Rand des Deckelkörpers 12 abstützen. Eine Feder 76 stützt sich einerseits auf der Außenseite des Hebels 34 im Bereich der Klaue 36 ab, an der anderen Seite ist diese in der Auflage 78 verankert. Die Feder 76 ist so vorgespannt, daß sie die Klaue 36 des Hebels 34 radial nach innen drückt und gleichzeitig den Hebel 34 so beaufschlagt, daß dieser in Richtung Behälter gedrückt wird.

Die nähere konstruktive Ausgestaltung und die Funktionsweise der zuvor beschriebenen Baueinheit soll im Zusammenhang mit der Figurenfolge von Fig. 3 bis 6 näher beschrieben und erläutert werden.

In Fig. 3 ist eine Situation dargestellt, bei der der Deckelkörper 12 auf dem Kragenflansch 40 des Druckbehälters 44 aufliegt, und zwar über dessen Ringflansch 18. Beide Kolben der Kolben/Zylinder-Einheiten 50 und 51 sind ausgefahren, die Nokkenplatten 64, 64' ruhen über ihre Funktionsfläche 66 auf der Auflage 78. Die Feder 76 hat den Hebel 34 und somit die Klaue 36 radial nach innen gedrückt, und die Klaue 36 greift in die Hinterschneidung 38 ein. Der Bolzen 70, der den Hebel 34 mit den Nockenplatten 64, 64' verbindet, befindet sich im Langloch 75 in seiner maximal angehobenen Position. Dabei wird die Klaue 36 bzw. der Hebel gegen die Kraft der Feder 70 so weit angehoben bzw. hochgezogen, daß die Klaue 36 völlig in die Hinterschneidung 38 eingegriffen hat. Dabei sitzt der Deckel 10 geschlossen auf dem Kragenflansch 40 des Druckbehälters 44 und ist über das Verriegelungselement 32 mit letzterem verriegelt. In diesem in Fig. 3 dargestellten Zustand kann der Deckel 10 nicht abgehoben werden.

Zum Öffnen des Deckels 10 wird das Verriegelungselement 32 in eine Zwischenstellung verbracht, wie sie in Fig. 4 dargestellt ist. Dazu wird der Kolben der radial inneren Kolben/Zylinder-Einheit 51 eingezogen. Dabei wird der Antrieb 46 radial nach innen bewegt, und die Nockenplatten 64, 64' werden um den Bolzen 70 so verdreht, daß die Funktionsfläche 67 auf der Auflage 78 zum Liegen kommt. In dieser Stellung ist das Verriegelungselement 32, sprich der Hebel 34, etwas nach unten bewegt worden, wie das durch einen Pfeil 85 angedeutet ist. Dabei hat die Klaue 36 etwas, ca. 2 mm, von der Hinterschneidung 38 abgehoben, jedoch ist es noch nicht möglich, die Klaue 36 radial nach außen wegzuschwenken. Diese Bewegung ist noch durch die Hinterschneidung 38 gesperrt.

Es ist aber nun möglich, daß der Deckel 10 genau um diesen Weg, also diese etwa 2 mm, abheben kann, wobei dies beispielsweise durch einen verbliebenen Restdruck im Druckbehälter 44 verursacht wird.

Diese Situation ist in Fig. 5 dargestellt. Der Deckelkörper 12 ist nun etwas angehoben, wie das durch einen Pfeil 85 dargestellt ist, wobei dann die Klaue 36 wieder vollständig in die Hinterschneidung 38 eingezogen worden ist. Dadurch entsteht nunmehr ein Spalt 86 zwischen der Oberseite des Kragenflansches 40 des Druckbehälters 44 und der Unterseite des Deckelkörpers 12, über den dann überschüssiges, unter Druck stehendes Medium austreten kann, wie das durch einen Pfeil 59 angedeutet ist.

Um dieses Abheben auf jeden Fall sicherzustellen, unabhängig davon, ob noch überschüssiges Druckmedium vorhanden ist oder nicht, ist eine insbesondere aus Fig. 2 ersichtliche Abhebevorrichtung 80 vorgesehen, die einen in Abheberichtung des Dekkelkörpers 12 bewegbaren Bolzen 82 aufweist, der sich auf dem Kragenflansch 40 abstützt. Die Abhebevorrichtung 80 weist eine pneumatisch gesteuerte Kolben/Zylinder-Einheit auf, die über die zentrale Steuerungsvorrichtung 60 gesteuert wird. Wird also der Kolben bzw. Bolzen 82 ausgefahren, wird der Deckelkörper 12 ganz gezielt und definiert um die Strecke angehoben, die dem Übergang des Deckelkörpers von Fig. 4 zu Fig. 5 entspricht. Entsprechende, hier nicht dargestellte Sensoren überwachen und detektieren diese Stellung bzw. das Ausfahren des Bolzens 82.

Erst anschließend kann die jeweilig radial weiter außen liegende Kolben/Zylinder-Einheit 50 eines Antriebes 46 betätigt werden, indem der entsprechende Kolben eingefahren wird, wobei dann die Nockenplatten 64, 64' aus der in Fig. 5 dargestellten Position in die in Fig. 6 dargestellte Position bewegt werden, wie das durch einen Pfeil 69 angedeutet ist. Bei dieser Bewegung trifft nun der Mitnehmer 74 zwischen den Nockenplatten 64, 64' auf den Hebel 34 und schwenkt diesen gegen die Kraft der Feder 76 radial nach außen, wie das in Fig. 6 durch einen Pfeil 89 dargestellt ist. Wie zuvor erwähnt, ist die Feder 76 so vorgespannt, daß diese den Hebel 34 "nach unten", also in Richtung Druckbehälter 44, (siehe Pfeil 87) drückt. Wird nun die Nockenplatte 64 bzw. 64' aus der Darstellung von Fig. 5 in die Position von Fig. 6 verschwenkt, tritt die Funktionsfläche 68, die relativ steil ansteigend ist, mit der Auflage 78 in Eingriff. Bei diesem Übergang ist es möglich, daß sich der Zusammenbau aus Nockenplatte 64, 64' und Hebel 34 in dem Langloch 75 weiter nach unten bewegt, so daß dann die Klaue 36 so weit von der Hinterschneidung 38 abhebt, daß der Hebel 34 radial nach außen verschwenkt werden kann, wie das in Fig. 6 durch einen Pfeil 89 angedeutet ist, und dann die entriegelnde Stellung, wie sie in Fig. 1 und 6 dargestellt ist, erreicht.

In dieser entriegelnden Stellung kann nunmehr der Deckel 10 von der Öffnung 42 des Druckbehälters 44 abgenommen werden.

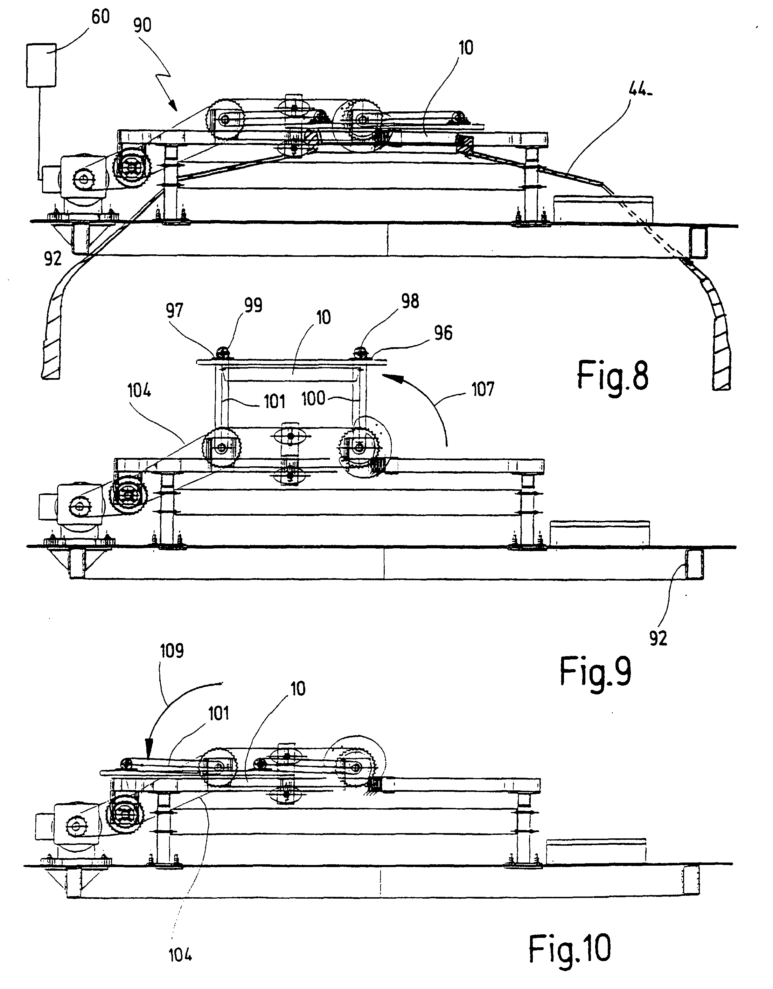

In den Fig. 8 bis 11 ist dargestellt, daß dazu ein Öffnungsmechanismus 90 vorgesehen ist.

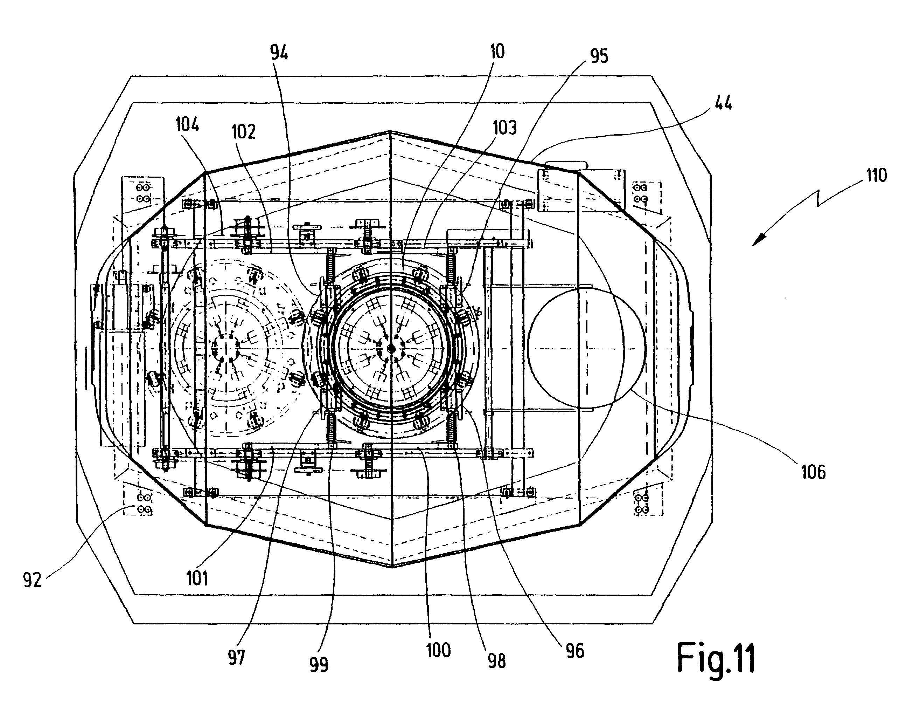

Der Öffnungsmechanismus 90 weist einen Grundrahmen 92 auf, der auf die Außenseite des Druckbehälters 44 aufgesetzt ist, wie das insbesondere aus der Draufsicht von Fig. 11 ersichtlich ist. Der Druckbehälter 44 hat dabei eine etwa faßförmige Form und stellt den um eine horizontale Achse drehbaren Behälter eines Trommelkochers 110 dar.

Der Deckel 10 hängt an vier Auflagen 94, 95, 96 und 97. Diese Auflagen führen zwei parallel zueinander verlaufende Wellen 98 und 99. Die beiden Wellen 98 und 99 sind an äußeren Enden von vier Parallelogrammarmen 100, 101, 102, 103 aufgenommen.

Die Parallelogrammarme 100, 101, 102, 103 werden über einen Kettentrieb 104 bewegt.

Aus der Draufsicht von Fig. 11 und der Seitenansicht von Fig. 8 ist zu erkennen, daß in dieser Position der Deckel noch auf der Öffnung des Druckbehälters 44 aufliegt, jedoch bereits entriegelt ist. Der Kettentrieb 104 treibt nun die Parallelogrammarme 100, 101, 102, 103 so an, daß der Deckel 10 abgehoben wird, wie das aus dem Übergang von Fig. 8 zu Fig. 9 durch einen Pfeil 107 dargestellt ist, und durch weiteres Bewegen (siehe Pfeil 109) wird der Deckel 10 seitlich versetzt abgelegt, wie das aus dem Übergang von Fig. 9 zu Fig. 10 ersichtlich ist. Diese Position des Deckels 10 ist in Fig. 11 in gestrichelter Position dargestellt.

Die Öffnung 42 im Druckbehälter 44 liegt nun frei, und dieser kann nun entweder befüllt oder entleert werden, wobei hier zusätzlich noch ein Einfüllstutzen 106, wie er aus Fig. 11 ersichtlich ist, vorgesehen ist, der in die Öffnung 42 eingeschwenkt werden kann.

In Fig. 8 ist angedeutet, daß auch der Öffnungsmechanismus 90 mit der zentralen Steuerungsvorrichtung 60 verbunden ist, so daß alle Vorgänge, sei es Verriegeln, Entriegeln als auch Abheben des Deckels 10, vollautomatisch und zentral gesteuert ablaufen. Entsprechende, hier nicht dargestellte Sensoren erfassen die jeweilige Stellung der Verriegelung 30 bzw. der Abhebevorrichtung 90, und eine entsprechende Logik sorgt dann für die folgerichtigen Abläufe. Es ist also möglich, nicht nur das Verriegeln und Entriegeln des Deckels 10 vollautomatisch ohne manuellen Eingriff durch Handhabungspersonen durchzuführen, sondern auch noch zugleich das Öffnen und Schließen des Deckels 10.

## Patentansprüche

1. Deckel zum Verschließen einer Öffnung (42) in einem Druckbehälter (44), mit einem Deckelkörper (12) und mit einer Verriegelung (30) zum Verriegeln des Deckelkörpers (12) mit dem Druckbehälter (44), wobei die Verriegelung (30) mehrere um die Öffnung (42) umfänglich verteilt angeordnete Verriegelungselemente (32) aufweist, die am Deckelkörper (12) angebracht sind, und die über eine zentrale Steuerungsvorrichtung (60) automatisiert steuerbar sind, **dadurch gekennzeichnet, dass** die Verriegelungselemente (32) über an der Außenseite des Deckelkörpers (12) angeordnete Antriebe (46, 47) bewegbar sind, und dass die Steuerungsvorrichtung (60) die Antriebe (46, 47) zwischen einer verriegelnden, einer Zwischenstellung, und einer entriegelnden Stellung steuert.

2. Deckel nach Anspruch 1, **dadurch gekennzeichnet, dass** die Steuerungsvorrichtung (60) die Verriegelungselemente (32) derart steuert, dass diese aus einer verriegelnden Stellung in eine Zwischenstellung bewegbar sind, in der der Deckelkörper (12) zwar noch unverlierbar am Druckbehälter (44) von den Verriegelungselementen (32) gehalten ist, jedoch ein Druckausgleich (59) vom Druckbehälter (44) zur Außenwelt durch Austreten von Druckmedium zwischen Öffnung (42) und Deckelkörper (12) ermöglicht ist.

3. Deckel nach Anspruch 2, **dadurch gekennzeichnet, dass** in der Zwischenstellung der Verriegelungselemente (32) der Deckelkörper (12) etwas von der Öffnung (42) abheben (85) kann.

4. Deckel nach Anspruch 3, **dadurch gekennzeichnet, dass** am Deckelkörper (12) eine Abhebevorrichtung (80) vorgesehen ist, die den Deckelkörper (12) in der Zwischenstellung gezielt von der Öffnung (42) abhebt.

5. Deckel nach Anspruch 4, **dadurch gekennzeichnet, dass** die Abhebevorrichtung (80) einen über die Steuerungsvorrichtung (60) bewegbaren Bolzen (82) aufweist, der sich auf dem Druckbehälter (44) abstützt und dabei den Deckelkörper (12) gezielt von der Öffnung (42) abhebt.

6. Deckel nach einem der Ansprüche 1 bis 5, **dadurch gekennzeichnet, dass** der Deckelkörper (12) über einen Öffnungsmechanismus (90) von der Öffnung (42) weg und auf diese zu bewegbar ist.

7. Deckel nach Anspruch 6, **dadurch gekennzeichnet, dass** der Öffnungsmechanismus (90) als Parallelogrammechanismus ausgebildet ist, der den Deckelkörper (12) von der Öffnung (42) abhebt und seitlich absetzt.

8. Deckel nach einem der Ansprüche 1 bis 7, **dadurch gekennzeichnet, dass** die Verriegelungselemente (32) Klauen (36) aufweisen, die in einen Kragenflansch (34), der die Öffnung (42) am Druckbehälter (44) umrundet, eingreifen.

9. Deckel nach einem der Ansprüche 6 bis 8, **dadurch gekennzeichnet, dass** die Verriegelungselemente (32) als Hebel (34) ausgebildet sind, die mit den Antrieben (46, 47) verbunden sind.

10. Deckel nach Anspruch 9, **dadurch gekennzeichnet, dass** zwischen Antrieb (46, 47) und Hebel (34) ein Nocken (64, 64') angeordnet ist, über den der Hebel (34) verschwenkbar und in Öffnungs- bzw. Schließrichtung des Deckelkörpers (12) hin- und herbewegbar ist.

11. Deckel nach Anspruch 10, **dadurch gekennzeichnet, dass** die Antriebe (46, 47) als Kolben/Zylinder-Einheiten (50, 51) ausgebildet sind, und dass ein Ausfahrende eines Kolbens mit dem Nocken (64, 64') verbunden ist, welcher sich auf dem Deckelkörper (12) abstützt.

12. Deckel nach einem der Ansprüche 1 bis 11, **dadurch gekennzeichnet, dass** die Antriebe (46, 47) sich in radialer Richtung auf der Außenseite des Deckelkörpers (12) erstrecken, und dass jeder Antrieb (46, 47) mit einem Verriegelungselement (32) verbunden ist, und dass die Steuerungsvorrichtung (60) die Antriebe (46, 47) synchronisiert steuert.

13. Deckel nach Anspruch 12, **dadurch gekennzeichnet, dass** jeder Antrieb (46, 47) aus zwei aneinandergereihten entgegengesetzten Kolben/Zylinder-Einheiten (50, 51) aufgebaut ist, wobei eine Kolben/Zylinder-Einheit (50) zum Bewegen eines Verriegelungselementes (32) zwischen der verriegelnden und der Zwischenstellung dient, und die andere Kolben/Zylinder-Einheit (51) zum Bewegen zwischen der Zwischenstellung und einer entriegelnden Stellung dient.

14. Deckel nach einem der Ansprüche 1 bis 13, **dadurch gekennzeichnet, dass** der Deckelkörper (12) mit einer als Blähdichtung (20) ausgebildeten Dichtung versehen ist.

15. Deckel nach Anspruch 14, **dadurch gekennzeichnet, dass** die Blähdichtung (20), von der Steuerungsvorrichtung (60) gesteuert, mit einem Blähdruck beaufschlagbar ist, der größer als der Innendruck im Druckbehälter (44) ist.

16. Deckel nach Anspruch 14 oder 15, **dadurch gekennzeichnet, dass** benachbart zur Blähdichtung (20) eine Spülnut (26) im Deckelkörper (12) ausgespart ist, in die ein Spülmedium zum Reinigen der Blähdichtung (20) einspeisbar ist.

17. Trommelkocher zum Behandeln von körnigem Gut, mit einem Druckbehälter (44), der eine Öffnung (42) aufweist, **dadurch gekennzeichnet, dass** dieser Druckbehälter (44) mit einem Deckel (10) nach einem der Ansprüche 1 bis 16 verschlossen ist.

## Claims

1. Lid for closing an opening (42) in a pressure container (44), having a lid body (12) and having a lock (30) for locking the lid body (12) to the pressure container (44), the lock (30) having a plurality of locking elements (32) which are distributed circumferentially around the opening (42), are attached to the lid body (12) and can be controlled in an automated manner via a central control device (60), **characterized in that** the locking elements (32) can be moved via drives (46, 47) arranged on the outside of the lid body (12), and **in that** the control device (60) controls the drives (46, 47) between a locking position, an intermediate position and a release position.

2. Lid according to Claim 1, **characterized in that** the control device (60) controls the locking elements (32) in such a manner that they can be moved from a locking position into an intermediate position, in which although the lid body (12) is still held captively on the pressure container (44) by the locking elements (32), a pressure compensation (59) from the pressure container (44) to the outside world is made possible by pressure medium emerging between the opening (42) and lid body (12).

3. Lid according to Claim 2, **characterized in that** the lid body (12) can lift off (85) somewhat from the opening (42) in the intermediate position of the locking elements (32).

4. Lid according to Claim 3, **characterized in that** a lifting-off device (80) is provided on the lid body (12) and lifts off the lid body (12) from the opening (42) in a specific manner in the intermediate position.

5. Lid according to Claim 4, **characterized in that** the lifting-off device (80) has a bolt (82) which can be moved via the control device (60), is supported on the pressure container (44) and lifts off the lid body (12) from the opening (42) in a specific manner.

6. Lid according to one of Claims 1 to 5, **characterized in that** the lid body (12) can be moved away from the opening (42) and towards the latter via an opening mechanism (90).

7. Lid according to Claim 6, **characterized in that** the opening mechanism (90) is designed as a parallelogram mechanism which lifts off the lid body (12) from the opening (42) and deposits it laterally.

8. Lid according to one of Claims 1 to 7, **characterized in that** the locking elements (32) have claws (36) which engage in a collar-type flange (34) which runs around the opening (42) on the pressure container (44).

9. Lid according to one of Claims 6 to 8, **characterized in that** the locking elements (32) are designed as levers (34) which are connected to the drives (46, 47).

10. Lid according to Claim 9, **characterized in that** a cam (64, 64') is arranged between the drive (46, 47) and lever (34) and the lever (34) can be pivoted via the said cam and can be moved to and fro in the opening and closing direction of the lid body (12).

11. Lid according to Claim 10, **characterized in that** the drives (46, 47) are designed as piston/cylinder units (50, 51), and **in that** an extension end of a piston is connected to the cam (64, 64'), which is supported on the lid body (12).

12. Lid according to one of Claims 1 to 11, **characterized in that** the drives (46, 47) extend in the radial direction on the outside of the lid body (12), and **in that** each drive (46, 47) is connected to a locking element (32), and **in that** the control device (60) controls the drives (46, 47) in synchronized fashion.

13. Lid according to Claim 12, **characterized in that** each drive (46, 47) is constructed from two opposed piston/cylinder units (50, 51) which are lined up next to each other, one piston/cylinder unit (50) serving to move a locking element (32) between the locking position and the intermediate position, and the other piston/cylinder unit (51) serving to move it between the intermediate position and a release position.

14. Lid according to one of Claims 1 to 13, **characterized in that** the lid body (12) is provided with a seal designed as an expanding seal (20).

15. Lid according to Claim 14, **characterized in that** the expanding seal (20), under control by the control device (60), can be subjected to an expanding pressure which is greater than the internal pressure in the pressure container (44).

16. Lid according to Claim 14 or 15, **characterized in that** a flushing groove (26) is left open in the lid body (12) adjacent to the expanding seal (20) and a flushing medium for cleaning the expanding seal (20) can be fed into the said flushing grove.

17. Drum-type cooker for treating granular material, having a pressure container (44) which has an opening (42), **characterized in that** this pressure container (44) is closed with a lid (10) according to one of Claims 1 to 16.

## Revendications

1. Couvercle permettant de fermer une ouverture (42) dans un récipient sous pression (44), comportant un corps de couvercle (12) et un verrou (30) pour verrouiller le corps de couvercle (12) au récipient sous pression (44), le verrou (30) comprenant plusieurs éléments de verrouillage (32), répartis autour de l'ouverture (42) de manière circonférentielle, qui sont montés sur le corps de couvercle (12) et qui peuvent être commandés de manière automatisée par le biais d'un dispositif de commande central (60), **caractérisé en ce que** les éléments de verrouillage (32) peuvent être déplacés par le biais d'entraînements (46, 47) disposés sur le côté externe du corps de couvercle (12) et **en ce que** le dispositif de commande (60) commande les entraînements (46, 47) entre une position de verrouillage, une position intermédiaire et une position de déverrouillage.

2. Couvercle selon la revendication 1, **caractérisé en ce que** le dispositif de commande (60) commande les éléments de verrouillage (32) de telle sorte que ces derniers soient déplaçables d'une position de verrouillage à une position intermédiaire dans laquelle le corps de couvercle (12) est encore maintenu solidement sur le récipient sous pression (44) par les éléments de verrouillage (32) et un équilibrage de la pression (59) du récipient sous pression (44) vers l'extérieur, par l'expulsion d'agent de pressurisation entre l'ouverture (42) et le corps de couvercle (12), est toutefois rendu possible.

3. Couvercle selon la revendication 2, **caractérisé en ce que**, dans la position intermédiaire des éléments de verrouillage (32), le corps de couvercle (12) peut être légèrement soulevé (85) de l'ouverture (42).

4. Couvercle selon la revendication 3, **caractérisé en ce que**, sur le corps de couvercle (12) est prévu un dispositif de levage (80) qui soulève de manière ciblée, dans la position intermédiaire, le corps de couvercle (12) de l'ouverture (42).

5. Couvercle selon la revendication 4, **caractérisé en ce que** le dispositif de levage (80) comprend un axe (82), déplaçable par le biais du dispositif de commande (60), qui s'appuie sur le réservoir sous pression (44) et, à cette occasion, soulève de manière ciblée le corps de couvercle (12) de l'ouverture (42).

6. Couvercle selon l'une quelconque des revendications 1 à 5, **caractérisé en ce que** le corps de couvercle (12) peut être déplacé à partir de l'ouverture (42) et en direction de celle-ci par le biais d'un mécanisme d'ouverture (90).

7. Couvercle selon la revendication 6, **caractérisé en ce que** le mécanisme d'ouverture (90) est réalisé sous la forme d'un mécanisme parallélogramme qui soulève le corps de couvercle (12) de l'ouverture (42) et le dépose sur le côté.

8. Couvercle selon l'une quelconque des revendications 1 à 7, **caractérisé en ce que** les éléments de verrouillage (32) comportent des griffes (36) qui s'engrènent dans une bride à collet (34) qui entoure l'ouverture (42) sur le réservoir sous pression (44).

9. Couvercle selon l'une quelconque des revendications 6 à 8, **caractérisé en ce que** les éléments de verrouillage (32) sont réalisés sous la forme de leviers (34) qui sont raccordés aux entraînements (46, 47).

10. Couvercle selon la revendication 9, **caractérisé en ce que**, entre l'entraînement (46, 47) et le levier (34), est disposé une came (64, 64') par le biais de laquelle le levier (34) peut être pivoté et déplacé vers le haut et vers le bas dans le sens de l'ouverture ou de fermeture du corps de couvercle (12).

11. Couvercle selon la revendication 10, **caractérisé en ce que** les entraînements (46, 47) sont réalisés sous la forme d'unités piston-cylindre (50, 51) et **en ce qu'**une extrémité de sortie d'un piston est reliée à la came (64, 64'), laquelle came s'appuie sur le corps de couvercle (12).

12. Couvercle selon l'une quelconque des revendications 1 à 11, **caractérisé en ce que** les entraînements (46, 47) s'étendent dans le sens radial sur la face externe du corps de couvercle (12) et **en ce que** chaque entraînement (46, 47) est raccordé à un élément de verrouillage (32) et **en ce que** le dispositif de commande (60) commande les entraînements (46, 47) de manière synchronisée.

13. Couvercle selon la revendication 12, **caractérisé en ce que** chaque entraînement (46, 47) est construit à partir de deux unités piston-cylindre (50, 51) opposées, rangées l'une à côté de l'autre, une unité piston-cylindre (50) servant au déplacement d'un élément de verrouillage (32) entre la position de verrouillage et la position intermédiaire et l'autre unité piston-cylindre (51) servant au déplacement entre la position intermédiaire et une position de déverrouillage.

14. Couvercle selon l'une quelconque des revendications 1 à 13, **caractérisé en ce que** le corps de couvercle (12) est muni d'un joint réalisé sous la forme d'un joint gonflant (20).

15. Couvercle selon la revendication 14, **caractérisé en ce que** le joint gonflant (20), commandé par le dispositif de commande (60), peut être alimenté par une pression de gonflage qui est supérieure à la pression interne régnant à l'intérieur du réservoir sous pression (44).

16. Couvercle selon la revendication 14 ou 15, **caractérisé en ce que**, de manière adjacente au joint gonflant (20), une rainure de rinçage (26) est ménagée dans le corps de couvercle (12), rainure dans laquelle un agent de rinçage peut être injecté pour le nettoyage du joint de gonflage (20).

17. Cuiseur à tambour permettant de manipuler une matière granuleuse, comportant un réservoir sous pression (44) qui présente une ouverture (42), **caractérisé en ce que** ce réservoir sous pression (44) est fermé par un couvercle (10) selon l'une quelconque des revendications 1 à 16.
